# EUROPEAN PATENT APPLICATION

(11) **EP 1 457 988 A2**
(43) Date of publication of application: **15.09.2004**
(21) Application number: 04251356.4
(22) Date of filing: 10.03.2004
(51) Int. Cl.: G11B 23/023, G11B 15/68

(54) **Adapter for a tape cartridge bay**

(30) Priority: 12.03.2003 US 387653
(71) Applicant: QUANTUM CORPORATION, San Jose, California 95110 (US)
(72) Inventor: Thorson, Thomas Allen, Colorado Springs, Colorado 80909 (US); Collins, Paddy Eliot, Colorado Springs, Colorado 80920 (US)
(74) Representative: Charig, Raymond Julian

(57) **Abstract**

An adapter is provided for use in a tape cartridge magazine including one or more tape cartridge bays. Each tape cartridge bay includes a first bay wall for engaging a first side of a tape cartridge and a second bay wall separated from the first bay wall by a first clearance distance. The adapter includes a first side configured to engage the first bay wall of the cartridge bay; and a second side opposite the first side and being configured to engage the first side of the tape cartridge such that when said adapter is positioned on the first bay wall of the cartridge bay, said second side of the adapter is separated from the second bay wall of the cartridge bay by a second clearance distance.

## Description

### BACKGROUND OF THE INVENTION

A popular device for handling large amounts of information in a data processing system is an automated tape cartridge library. Tape cartridge libraries store and manage multiple tape cartridges containing magnetic tape media on which data is stored. Tape cartridge libraries typically include a plurality of fixed tape cartridge storage locations, at least one read/write tape drive, and a tape cartridge retrieval/transport mechanism, sometimes referred to as a "cartridge picker."

Cartridge pickers automatically exchange individual tape cartridges between the storage locations and one or more tape drives. Different types of cartridge pickers are used to accommodate the various tape cartridge arrangements in different tape cartridge libraries.

The tape drive or drives are typically mounted within or juxtaposed to the tape cartridge library and are operable to read and write data to or from the magnetic tape media in the tape cartridge. A host computer communicates with a library control unit and the tape drive to control the operation of the tape cartridge library.

Due to limitations on space in computer server rooms, the various components of a tape cartridge library are often very densely packed within the library chassis. In particular, in libraries designed to be mounted as a component on a computer rack, minimization of the vertical height of the library chassis can be important for enabling the library to fit into standard form factors (e.g., 2U height chassis). This limitation on vertical clearance in the library can severely limit the flexibility in selecting and arranging the components contained within the library.

### BRIEF SUMMARY OF THE INVENTION

In accordance with aspects of the present invention, an adapter is provided for use in a tape cartridge magazine comprising one or more tape cartridge bays, each tape cartridge bay including a first bay wall for engaging a first side of a tape cartridge and a second bay wall separated from the first bay wall by a first clearance distance. The adapter comprises a first side configured to engage the first bay wall of the cartridge bay; and a second side opposite the first side and being configured to engage the first side of the tape cartridge such that when said adapter is positioned on the first bay wall of the cartridge bay, said second side of the adapter is separated from the second bay wall of the cartridge bay by a second clearance distance.

In accordance with other aspects of the present invention, a tape cartridge system is provided. The tape cartridge system comprises a tape cartridge magazine comprising one or more cartridge bays, each cartridge bay having a first bay wall; and an adapter having a first side engaging the first bay wall of at least one of the cartridge bays and a second side opposite the first side, such that when a tape cartridge is inserted in the tape cartridge magazine, the second side of the adapter engages the tape cartridge.

In accordance with other aspects of the present invention, a method is provided for operating a tape library system comprising a tape cartridge magazine having one or more cartridge bays, each cartridge bay including a first bay wall and a second bay wall opposite the first bay wall such that when a first tape cartridge of a first size is positioned in the cartridge bay, said first bay wall engages a first wall of the first tape cartridge. The method comprises coupling an adapter to the first bay wall of a cartridge bay; and inserting a second tape cartridge of a second size smaller than said first size into the cartridge bay such that a first wall of the second tape cartridge engages the adapter.

Other features and aspects of the invention will become apparent from the following detailed description, taken in conjunction with the accompanying drawings which illustrate, by way of example, the features in accordance with embodiments of the invention. The summary is not intended to limit the scope of the invention, which is defined solely by the claims attached hereto.

### BRIEF DESCRIPTION OF THE SEVERAL VIEWS OF THE DRAWING(S)

FIGS. 1-2 show a library system in accordance with embodiments of the present invention.

FIGS. 3A-3C show a carriage and a tape cartridge transport magazine in accordance with embodiments of the present invention.

FIGS. 4A-4B show a tape cartridge transport magazine in accordance with embodiments of the present invention.

FIGS. 5A-5E show a cartridge picker in accordance with embodiments of the present invention.

FIG. 6 is a flow chart illustrating the operation during retrieval of the tape cartridge from the tape cartridge transport magazine in accordance with embodiments of the present invention.

FIG. 7 is a flowchart illustrating the delivery of the tape cartridge to the tape drive in accordance with embodiments of the present invention.

FIGS. 8A-8B show the linear path of a tape cartridge passing from the carriage to the tape drive in accordance with embodiments of the present invention.

FIGS. 9A-9C show the vertical alignment of the carriage picker, and tape drive, in accordance with embodiments of the present invention.

FIGS. 10A-10B show side views of a carriage having an adapter positioned therein, in accordance with embodiments of the present invention.

FIG. 11 is a flow chart illustrating the use of an adapter in accordance with embodiments of the present invention.

In the following description, reference is made to the accompanying drawings which form a part thereof, and which illustrate several embodiments of the present invention. It is understood that other embodiments may be utilized and structural and operational changes may be made without departing from the scope of the present invention. The use of the same reference symbols in different drawings indicates similar or identical items.

### DETAILED DESCRIPTION OF THE INVENTION

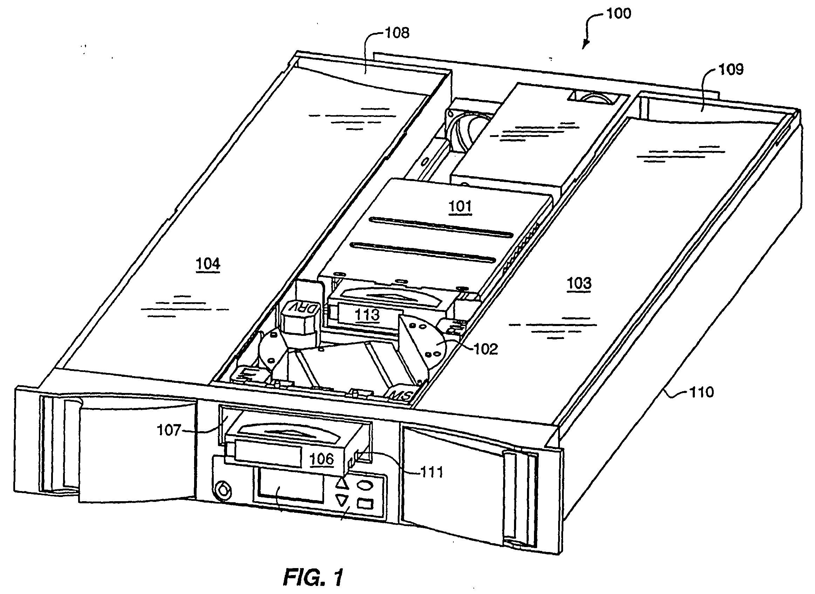

FIG. 1 shows a perspective view of a tape cartridge library system 100 used in accordance with embodiments of the present invention. Exemplary library systems 100 are described in greater detail in U.S. Application Serial No. 09/893,328, entitled "Tape Cartridge Transport Magazine for an Automated Tape Cartridge Autoloader/Library System" by Scott Ryan Patterson et al., filed June 27, 2001, and U.S. Application Serial No. 09/860,773, entitled "Tape Cartridge Picker for an Automated Tape Cartridge Autoloader/Library System" by Ryan Stuart Porter et al., filed May 17, 2001, the disclosures of which are incorporated herein in their entireties.

For purposes of illustration and not of limitation, various features and advantages of a configurable tape cartridge bay will now be described within the context of an exemplary autoloader/library system configured to accommodate a plurality of tape cartridges. It is to be understood that the following description with respect to the example of an autoloader/library system disclosed herein is not intended to limit the scope of the present invention. In other embodiments, the principles of the present invention could be applied to other tape libraries, autoloaders, and autoloader/library systems.

FIG. 1 depicts an example of an automated tape cartridge autoloader/library system 100 configured with tape cartridge transport magazines 103-104. The autoloader/library system 100 also includes a read/write tape drive 101, a tape cartridge picker 102, a single tape cartridge interface 107, and the pair of tape cartridge transport magazines 103-104 enclosed in a housing 110.

The autoloader/library system 100 can serve as a complete tape cartridge library that stores, manages, and automatically exchanges a plurality of tape cartridges, e.g. 106 and 113, between the tape drive 101, the single cartridge interface 107, and the tape cartridge transport magazine, 103-104. The autoloader/library system 100 could also include multiple tape drives and could be configured to accommodate multiple tape media formats as a matter of design choice by incorporating the appropriate tape drive format into the autoloader/library system 100. Some examples of the tape cartridge media 106 include without limitation, DLT, LTO, 8 millimeter, and SDLT tape cartridges.

The autoloader/library system 100 may provide a compact form factor, largely due to the tape cartridge transport magazines 103-104. In one example of the autoloader/library system 100, the housing 110 including the tape cartridge transport magazines 103-104 the tape drive 101, the cartridge picker 102, and all control elements including motors, circuitry, and processors, measures approximately 3.75 inches in height and fits into a standard 19" rack mount.

The tape cartridge transport magazines 103-104 may each be configured to receive and store a plurality of individual tape cartridges, e.g. 106 and 113, in a plurality of individual tape cartridge storage locations. The magazines 103-104 can receive the tape cartridges from the single cartridge interface 107 or be removed from the autoloader/library system and loaded with tape cartridges by an operator. The cartridge picker 102 rotates to position the cartridge picker 102 to exchange the individual tape cartridges, e.g. 106 and 113, with the tape drive 101, the tape cartridge transport magazines 103-104, and the single tape cartridge interface 107. The tape cartridge transport magazines 103-104 transport the individual tape cartridges, e.g. 106, in a vertical closed loop within the tape cartridge transport magazines 103-104 so that any one of the individual tape cartridges can be positioned for selection by the cartridge picker 102. The use of the transport mechanisms in the tape cartridge transport magazines 103-104 can significantly limit the travel required for the cartridge picker 102. For example, rather than move to the location of a desired tape cartridge 106, select the tape cartridge 106, and then move to the location of the tape drive 101, the cartridge picker 102 may simply rotate in a stationary picker base to position for the exchange of individual tape cartridges. The individual tape cartridges, are in turn, delivered to the cartridge picker 102 by the tape cartridge transport magazines 103-104.

The transport mechanisms in the magazines 103-104 may permit the magazines 103-104, the tape drive 101, the single cartridge interface 107, and the picker 102 to be coplanar within the autoloader/library system 100 to facilitate the compact form factor.

### Tape Cartridge Transport Magazine

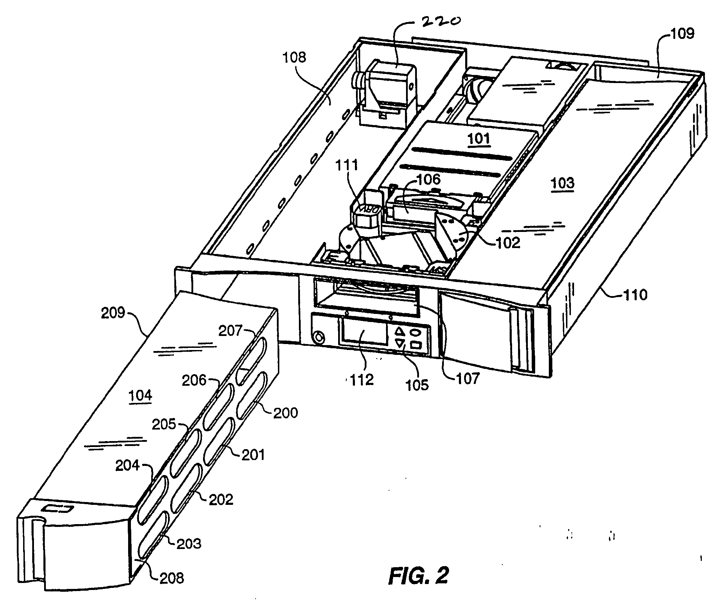

FIG. 2 shows the autoloader/library system 100 with the tape cartridge transport magazine 104 in the ejected position. The following description is primarily in reference to the tape cartridge transport magazine 104 but is equally applicable to the tape cartridge transport magazine 103, which may have the same design as the tape cartridge transport magazine 104.

The tape cartridge transport magazine 104 is configured to receive a plurality of tape cartridges, e.g. cartridge 106, in a plurality of storage locations 200-207 contained in a rectangular housing 209. As depicted in FIG. 2, these storage locations 200-207 may be "virtual" storage locations in that they need not be physically delimited spaces within the tape cartridge transport magazine 104, but are representative of the position of the tape cartridges within the magazine 104 when the magazine 104 is equipped with a full complement of tape cartridges. Therefore, the illustration of FIG. 2 includes eight cartridges loaded in the tape cartridge transport magazine 104 and oriented with four cartridges in a top row and four cartridges in a bottom row. It should be noted that while the tape cartridge transport magazine 104 is shown with eight storage locations 200-207, the magazines 103-104 could be configured with greater or fewer than the eight illustrated storage locations as a matter of design choice and type of tape cartridge accommodated. Additionally, it is not necessary that both the tape cartridge transport magazines 103-104 have the same number of storage locations 200-207. Finally, one of the tape cartridge transport magazines 103-104 could be configured for one type of tape media, e.g. DLT tape media, while the other one of the tape cartridge transport magazines 103-104 could be configured for another type of tape media, e.g. LTO tape media. In such a situation, the autoloader/library system 100 should be configured to accommodate the various tape formats being used.

The face of the tape cartridge transport magazine 104 may include a cover plate 208 in which are formed apertures that correspond to storage locations 200-207. The cover plate 208 may include greater or fewer apertures, but has at least a single aperture corresponding to a cartridge retrieval location located adjacent the cartridge picker 102. In the embodiment described herein, the storage location 204, as shown in FIG. 2, is the cartridge retrieval location that is aligned with the cartridge picker 102. Additionally, a slidable cover to reduce the possibility of the introduction of environmental contaminants into the tape cartridge transport magazine 104 may be used to cover or seal the aperture(s).

The tape cartridge transport magazine 104 is configured to slidably interface with a magazine port 108 in the housing 110, and the tape cartridge transport magazine 103 is configured to slidably interface with a magazine port 109 in the housing 110. Additionally, the tape cartridge transport magazines 103-104 may be interchangeable so that the tape cartridge transport magazine 104 can be used in the magazine port 109 and the tape cartridge transport magazine 103 can be used in the magazine port 108.

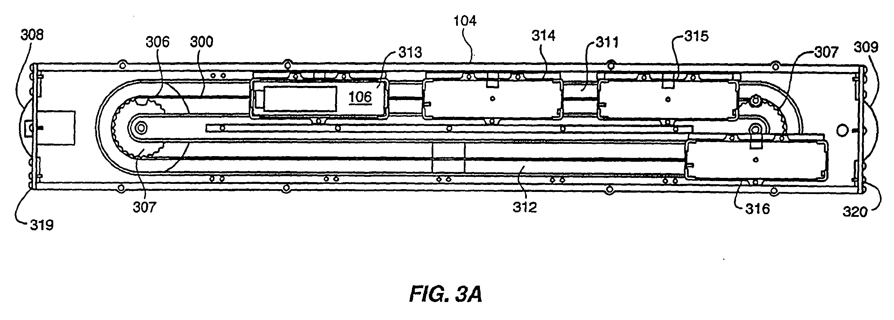

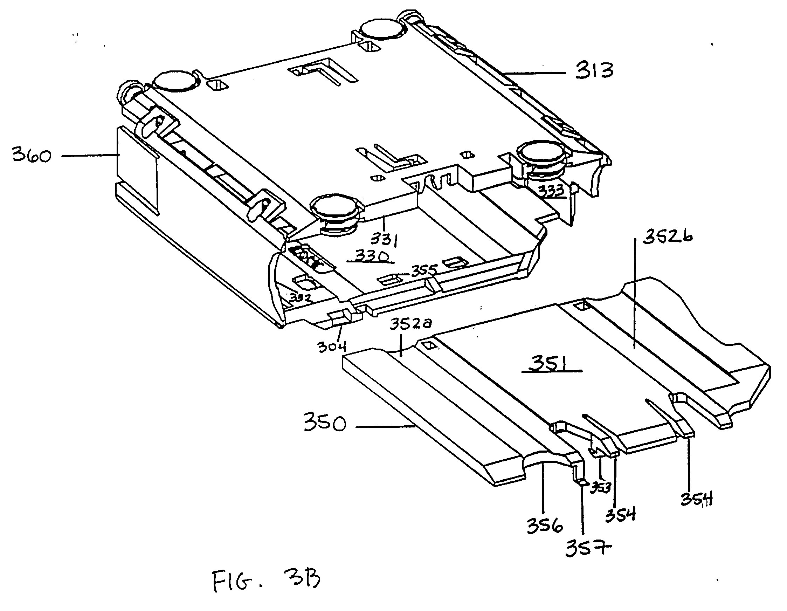

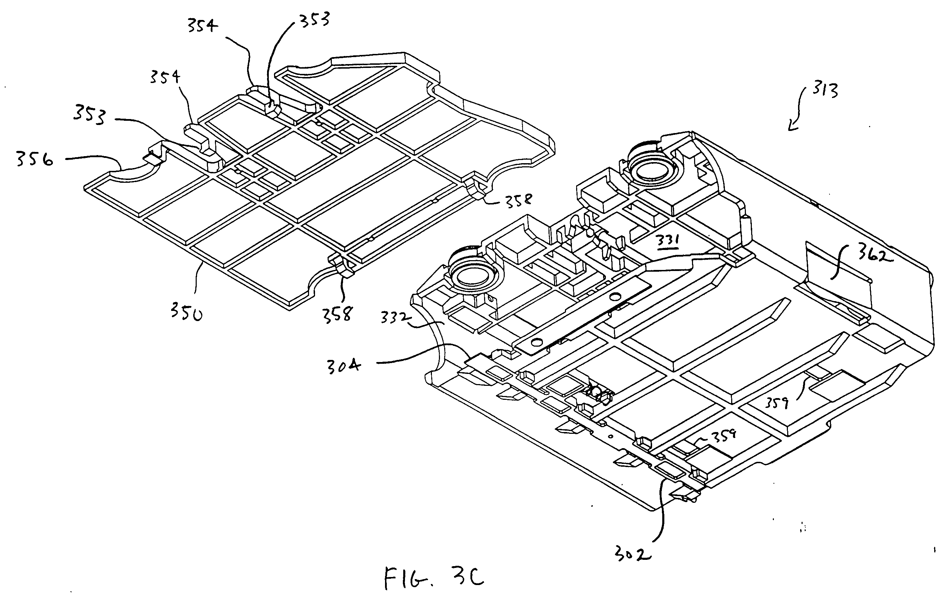

### Transport Mechanism FIGS. 3-10

As shown in FIGS. 3A-3C, the plurality of tape cartridges, e.g. 106, can be loaded into the tape cartridge transport magazine 104 by sliding the individual tape cartridges into individual tape cartridge receiving bays (shown as carriages 313-316). FIG. 3A shows a side view of the tape cartridge transport magazine 104. The carriages 313-316 are oriented in a horizontal relationship relative to the magazine 104. While only carriages 313-316 are shown in FIG. 3A, additional carriages which may be provided in the magazine 104 are omitted from the figure for clarity. Furthermore, carriages 314-316 are shown empty, while carriage 313 is shown with the tape cartridge 106. The following description is primarily related to carriage 313 but also applies to carriages 314-316.

FIG. 3B shows a perspective view of an exemplary carriage 313 and an adapter 350. The carriage 313 comprises a housing which can be a four-sided rectangular housing having a bottom bay wall 330, an opposing top bay wall 331, a first side bay wall 332, and an opposing second side bay wall 33. The back and front of the carriage 313 may be left open. The open front permits insertion of the tape cartridge 106.

FIG. 3C is a perspective view of the bottom of the carriage 313. A cartridge present switch 302 in the back of the carriage 313 indicates to the autoloader/library system 100 when a tape cartridge is present in carriage 313. The cartridge present switch 302 which protrudes into the interior of the carriage 313 is triggered by the insertion of the cartridge 106 into the carriage 313. As the cartridge 106 is inserted into the carriage 313, the cartridge 106 slides along the bottom bay wall 330 until the rear edge of the cartridge 106 contacts the cartridge present switch 302. As the cartridge 106 urged further into the carriage 313, the cartridge present switch 302 is pushed back toward the rear of the carriage 313 until the cartridge 106 comes to rest against a stop in the back of the carriage 313. As the cartridge present switch 302 is pushed toward the rear of the carriage 313, a flag 304 is retracted into the underside of the carriage 313. Operationally, a sensor in the autoloader/library system 100 senses the presence or absence of the flag 304 during an inventory operation to determine if the cartridge 106 is present in the carriage 313.

The carriage 313 may also include a cartridge retaining member 360 provided on the first bay wall 332 and a cartridge biasing member 362 provided on the second bay wall 333. The retaining member 360 may be formed as a cantilevered beam having a projection protruding into the carriage bay, and the biasing member 362 may be formed as a cantilevered beam configured to apply a lateral force on a tape cartridge 106 loaded into the carriage 313. The projection is positioned to engage a detent in the side of the tape cartridge 106 to releasably retain the tape cartridge 106 within the carriage 313.

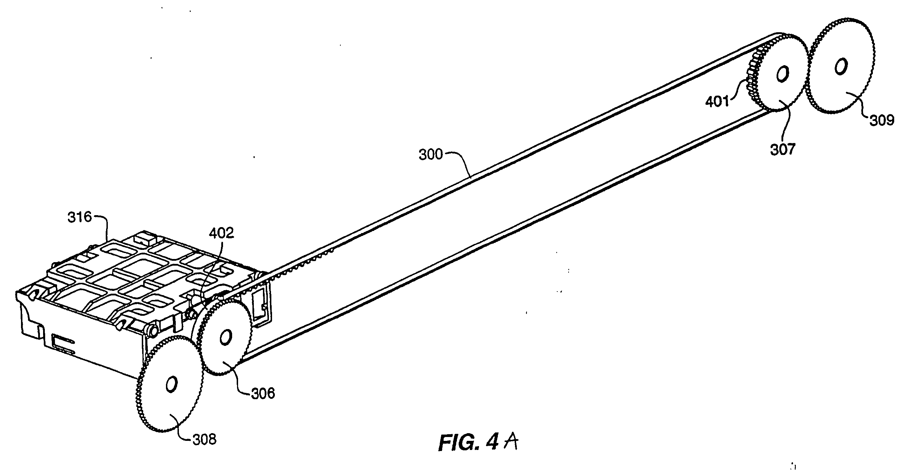

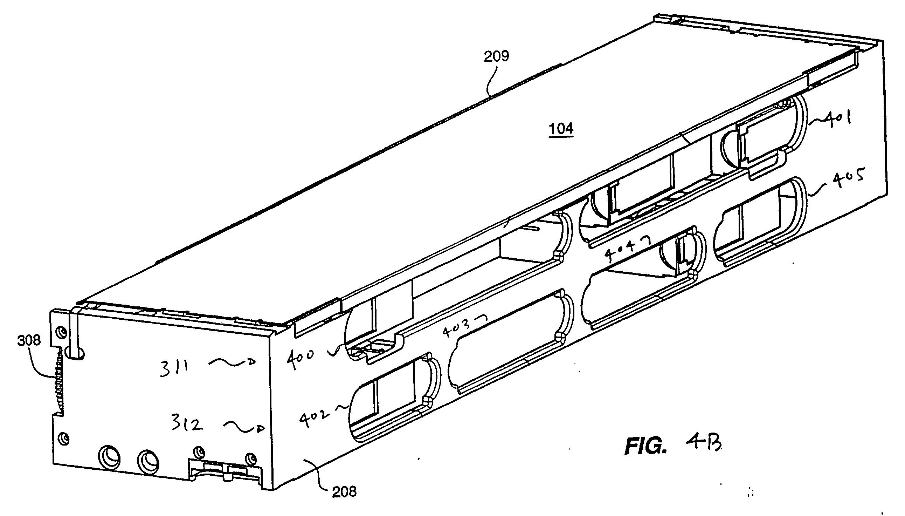

FIGS. 4A-4B show another embodiment of the magazine 104 having a modified cover plate 208 and an exemplary transport system. The tape cartridge transport magazine 104 transports the carriages 313-316 including the individual cartridges, e.g. 106, in a closed vertical loop between a top portion 311 and a bottom portion 312 of the magazine 104. A motor driven transport system moves carriages 313-316 to the different storage locations 200-207. The transport system comprises a belt 300 connected to each of the carriages 313-316. A gear assembly operates to rotate the belt 300 and transport the carriages 313-316 around the vertical loop.

As shown in FIG. 4B, a portion of the drive gears, 308 or 309, is also exposed in the assembled magazine 104 to permit the drive gears 308 and 309 to couple with the motors, e.g. 220, provided in the magazine ports 108 and 109. When the motor 220 is powered, the carriages 313-316 travel along the top portion 311 of the magazine 104 until they are passed to the bottom portion 312 of the magazine 104. The motor 220 may operate in both a forward and reverse direction to enable efficient positioning of a tape cartridge, e.g. 106, for selection and retrieval by the cartridge picker 102.

In addition, in FIG. 4B, the physical apertures 400-405 formed in the cover plate 208 do not precisely correspond with the storage locations 200-207. In the embodiment shown, the aperture 400 is the tape cartridge retrieval location from which the tape cartridges can be removed or inserted into the magazine 104. The remaining apertures 401-405 may be provided to allow a user to visually determine the presence of additional tape cartridges in the magazine 104.

When a tape cartridge transport magazine, 103 or 104, is inserted into the autoloader/library system 100, the autoloader/library system 100 may perform an inventory operation using the sensors as described above to determine which carriages, e.g. 313-316, contain tape cartridges and which carriages are empty. Thus, the autoloader/library system 100 may automatically maintain an inventory of loaded tape cartridges during operation. The autoloader/library system 100 may also maintain data indicative of the location of the tape cartridges and carriages within the magazines 103-104 so that a desired tape cartridge, e.g. 106, can be provided to the cartridge picker 102.

### Tape Cartridge Picker

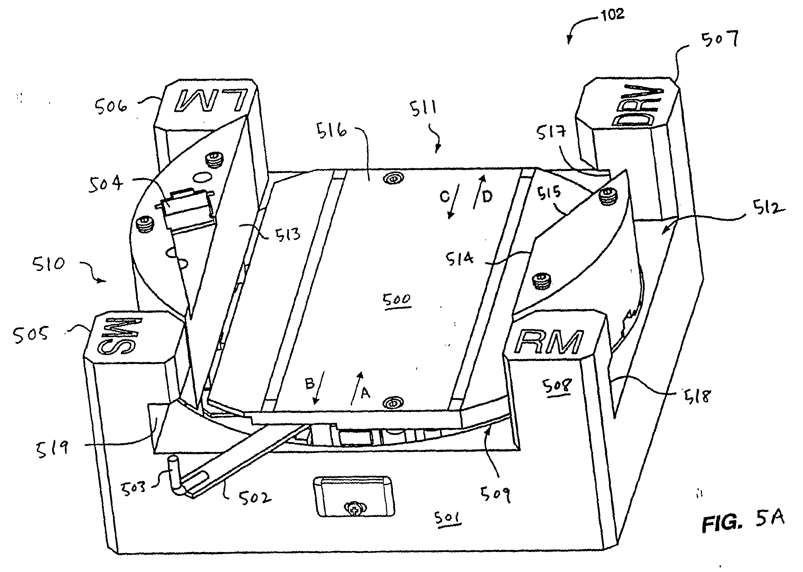

FIG. 5A is a perspective view of a cartridge picker 102 which may be used in accordance with embodiments of the present invention. The cartridge picker 102 comprises a translation arm 502 and a turntable 500 rotatably connected to a stationary base 501. The turntable 500 includes a central cavity 516 configured to receive the tape cartridge 106 on the turntable 500. Parallel walls 513 and 514, and a wall 515 integrally formed at a thirty-degree angle to wall 514, define the central cavity 516. The translation arm 502 includes a perpendicular cartridge pin 503 formed at one end of the arm 502. The pin 503 is configured to engage or seat in a notch 111 (shown on FIG. 1) formed in the tape cartridge 106.

When the tape cartridge 106 is exchanged between the cartridge picker 102 and the tape drive 101 or between the cartridge picker 102 and the magazines 103-104, the tape cartridge 106 is received in the cavity 516 in direction (A) and ejected from the cavity 516 in direction (B), as shown in FIG. 5A. Although the turntable 510 rotates, in the context of this application this entrance region is defined as the front of the turntable 500. Similarly, when the tape cartridge 106 is exchanged between the cartridge picker 102 and the single cartridge interface 107, the tape cartridge 106 is received in the cavity 516 from the opposing end of the cavity 516 in direction (C) and ejected from the cavity 516 in direction (D). In the context of the present application this is defined as the rear of the turntable 500.

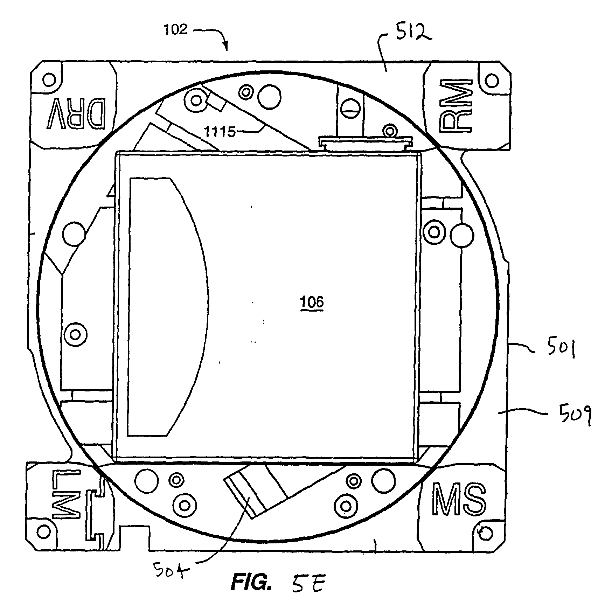

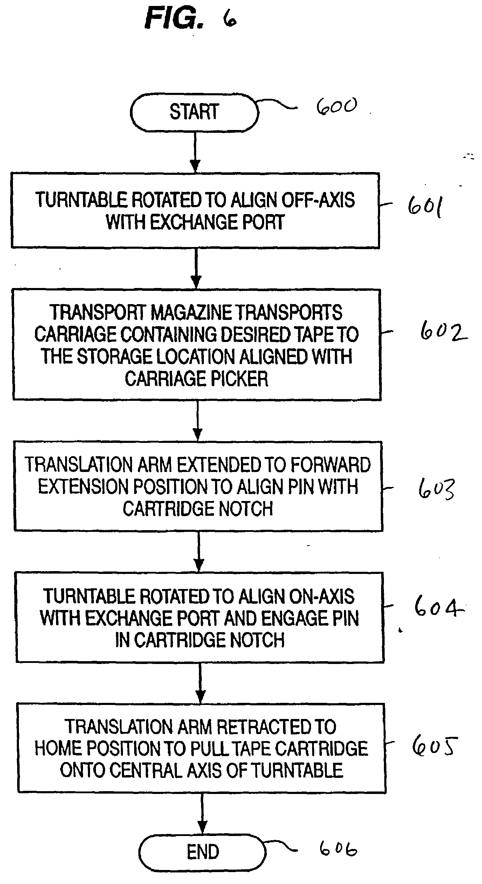

FIG. 6 is a flow chart illustrating the operation during retrieval of the tape cartridge 106 from the tape cartridge transport magazine 104. Those skilled in the art will appreciate that the operation is substantially identical for retrieval of the tape cartridge 106 from the tape cartridge transport magazine 103 and for retrieval of the tape cartridge 106 following ejection of the tape cartridge 106 from the tape drive 101.

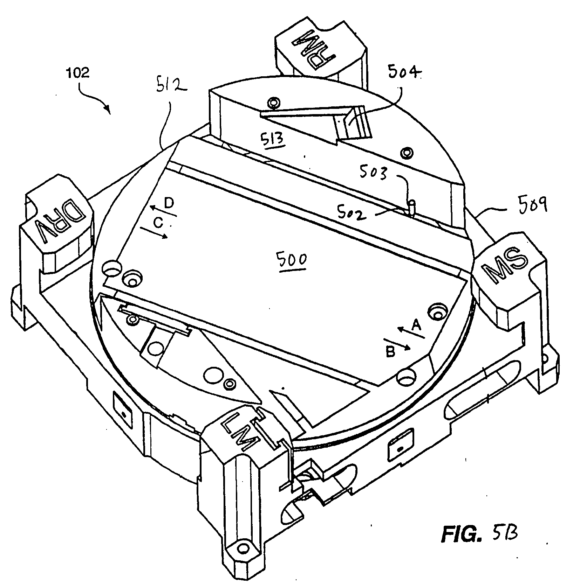

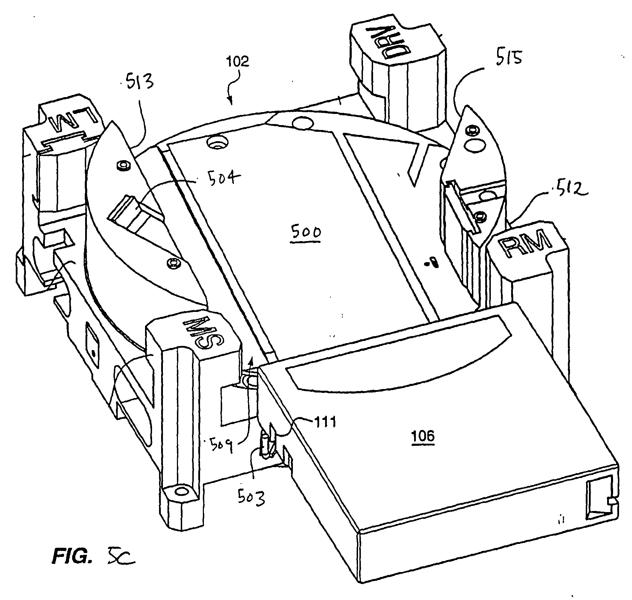

In FIG. 6, the operation begins at step 600 with the translation arm 502 in the home position of FIG. 5B. At step 601, the turntable 500 is rotated to align off-axis with the exchange port 509 and the magazine 104, as illustrated in FIG. 5C. The off-axis alignment is defined as any position of the turntable 500 where either the rear of the turntable 500 or the front of the turntable 500 is not directly aligned with one of the exchange ports 509-512. An on-axis alignment is defined as any position of the turntable 500 where either the rear of the turntable 500 or the front of the turntable 500 is aligned with one of the exchange ports 509-512. An example of the on axis alignment is illustrated in FIG. 5A by the on axis alignment with exchange port 509.

At step 602 (which may occur either before, after, or simultaneous with step 601), the transport magazine 104 transports the carriage, e.g. 313, containing the desired tape cartridge 106 to the cartridge retrieval location aligned with the cartridge picker 102. When carriage 313 is aligned with the picker 102, a supporting plane defined by the bottom bay wall 330 of the carriage 313 is substantially coplanar with the plane defined by the turntable 500.

As used herein, the term "coplanar" is used to describe the alignment of two surfaces such that a tape cartridge having a side positioned on the first surface can be conveyed to the second surface by applying a force in a direction parallel to the side of the tape cartridge without moving the tape cartridge in a direction perpendicular to the side of the tape cartridge. When two surfaces are not coplanar, the tape cartridge must be moved in the perpendicular direction in order to be transferred from one surface to the next. Two coplanar surfaces need not actually be completely planar and may contain various non-planar features. However, each of the surfaces define a plane against which the tape cartridge may be positioned and between which the tape cartridge may be transferred without undergoing perpendicular movement.

At step 603, the translation arm 502 is extended to the forward extension position shown in FIG. 5A so that the pin 503 is aligned with the cartridge notch 111 in the tape cartridge 106 (shown in FIG. 5C). The off-axis alignment with the exchange port 509 permits extension of the translation arm 502 to the forward extension position without interfering with the tape cartridge 106.

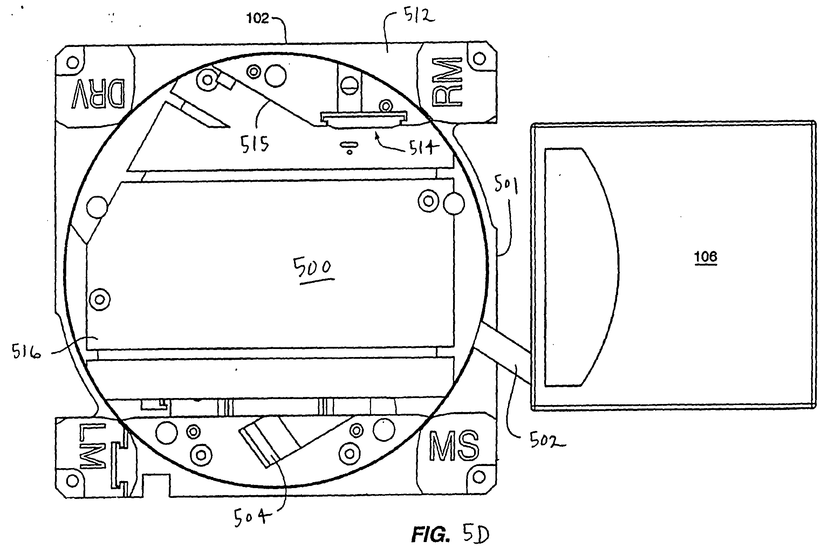

At step 604, the turntable 500 is rotated to align the front of the turntable 500 on-axis with the exchange port 509 and engage or seat the pin 503 in the cartridge notch 111 as shown in FIG. 5D. At step 605, the translation arm 502 is retracted to the home position shown in FIG. 5B to pull the tape cartridge 106 into the cavity 516 and onto the central axis of the turntable 500, as shown in FIG. 5E. The operation ends at step 606. Once in this position, the turntable 500 including the cartridge 106 may be freely rotated to deliver the tape cartridge 106 to the tape drive 101, the magazine 103, or the single cartridge interface 107.

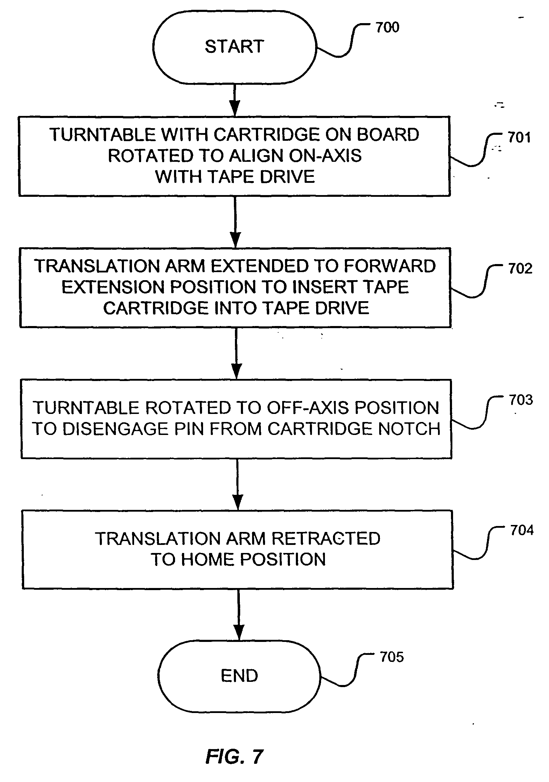

FIG. 7 is a flow chart illustrating the delivery of the tape cartridge 106 to the tape drive 101. The operation begins at step 700 with the tape cartridge 106 loaded onto the cartridge picker 102 as shown in FIG. 5E. At step 701, the turntable 500 is rotated to align the front of the turntable on-axis with the tape receiving opening of the tape drive 101 such that the supporting plane defined by the turntable 500 is coplanar with a drive supporting plane defined by the tape drive 101. At step 702, the translation arm 502 is extended to the forward extension position to insert the tape cartridge 106 into the tape drive 101. As the tape cartridge 106 passes from the picker 102 to the tape drive 101, the tape cartridge 106 is only moved in a lateral direction and does not undergo vertical translation. At step 703, the turntable 500 is again rotated to the three and one half degrees off-axis position to disengage the pin 503 from the cartridge notch 111. At step 704, the translation arm is retracted to the home position of FIG. 5B, so that the turntable 500 is free to rotate and perform additional operations. The operation ends at step 705.

### Tape Cartridge Adapter

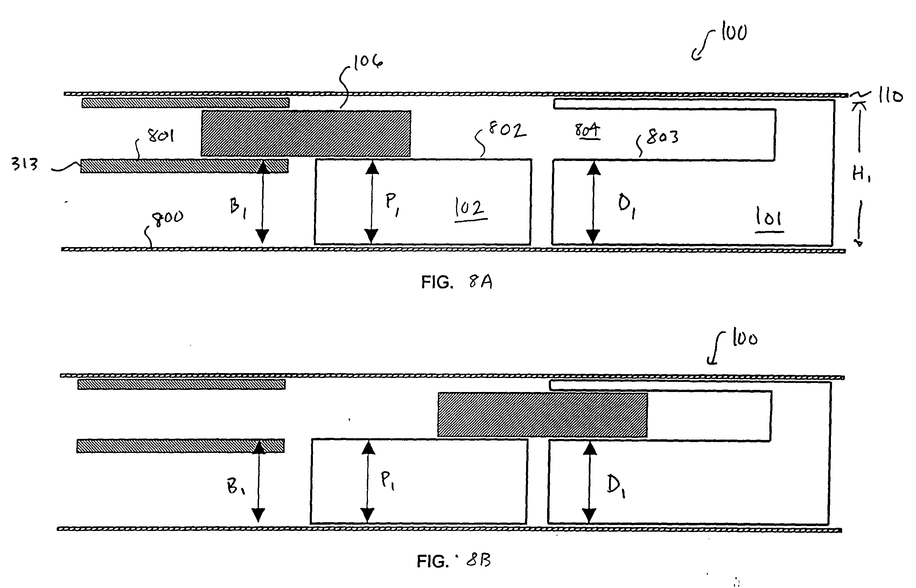

FIGS. 8A-8B are block diagrams illustrating the heights of the various components in the library system 100. In these figures, the carriage 313, the picker 102, and the tape drive 101 are shown as being laterally aligned such that the tape cartridge 106 can travel in a single linear path from the carriage 313, past the picker 102, and into the tape drive 101. However, in the embodiments described above, the tape cartridge 106 travels in a first linear path from the carriage 313 into the picker 102, is rotated 90 degrees, and then travels in a second linear path (orthogonal to the first linear path) into the tape drive 101. It will be understood that in the description below, the carriage 313 need not be laterally aligned with the tape drive 101 and that the picker 102 may rotate the cartridge during loading and unloading.

In FIGS. 8A-8B, the bottom bay wall 330 of the carriage 313 is positioned such that a supporting plane 801 defined by the bottom bay wall 330 is a distance B₁ above the bottom floor 800 of the library housing 110. Similarly, a supporting plane 802 defined by the upper surface of the turntable 500 of the picker 102 is a distance P₁ above the bottom floor 800, and a supporting plane 803 of the receiver portion 804 of the tape drive 101 is a distance D₁ above the bottom floor 800. As the tape cartridge 106 is transported from the carriage 313 to the picker 102 and to the tape drive 101, the tape cartridge 106 rests upon and is dragged across each of the supporting planes 801-803. In the system 100 shown in FIGS. 8A-8B, each of the supporting planes 801-803 is the same distance above the floor 800 (i.e., B₁ = P₁ = D₁). Accordingly, as the tape cartridge 106 is transported from the carriage 313 to the tape drive 101 by the picker 102, the tape cartridge 106 is translated only in the lateral direction and need not be vertically repositioned in order to move from component to component.

Different tape media formats may have differing form factor standards for the tape cartridge and/or the tape drives. For example, DLT tape cartridges are 1.00" tall, while the LTO tape cartridges are approximately 0.8465" tall. In addition, different tape drive manufacturers may configure the receiver portion 804 of the tape drives 101 to be located in a different vertical location. For example, a first drive manufacturer may design the tape drive such that the distance from the bottom of the tape drive to the supporting plane 803 of the receiver portion is D₁, while a second drive manufacturer may design a tape drive such that the distance from the bottom of the tape drive to the supporting plane 803 of the receiver portion is D₂, which is greater than D₁.

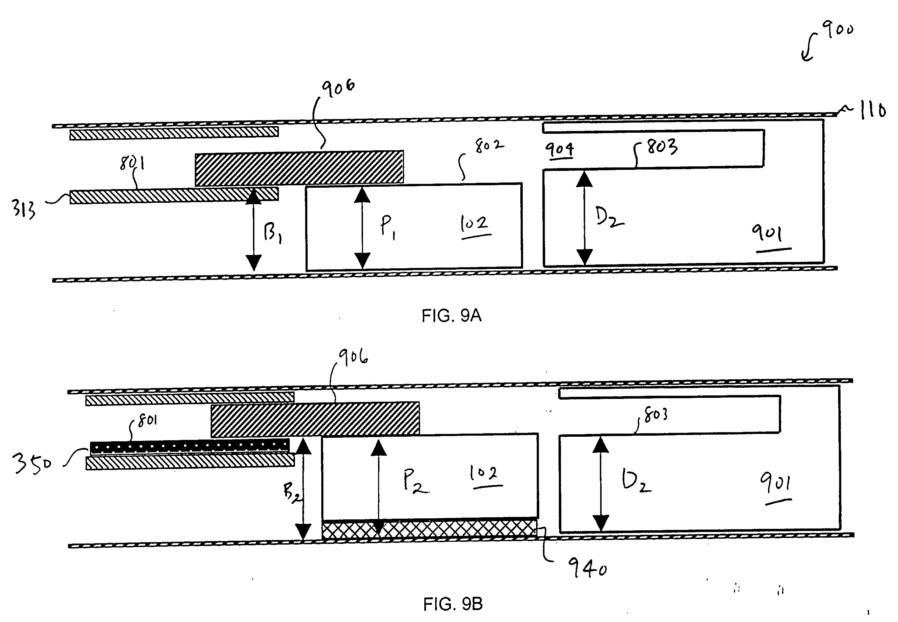

FIGS. 9A-9B show a tape library system 900 having a tape drive 901 having a receiver portion 904 with a supporting plane 803 which is provided at a height D₂ greater than D₁. Due to the compact form factor for the library chassis 110 and the overall height of the tape drive 901, it may not be possible to vertically reposition the tape drive 901 within the chassis 110 to align the receiver portion 904 with the picker 102. Accordingly, the supporting plane 803 of the tape drive 901 is not coplanar with either the supporting plane 801 or the supporting plane 802. Therefore, the tape cartridge 106 cannot be transferred from the carriage 313 into the tape drive 901 using only lateral translation.

FIG. 9B shows a tape library system 900 incorporating an adapter 350 in accordance with embodiments of the present invention. The adapter 350 may be positioned on the bottom wall 330 of the carriage 313 to thereby raise the supporting plane 801 to a height B₂ = D₂, such that the supporting plane 901 of the carriage 313 becomes coplanar with the supporting plane 803 of the tape drive 901. Similarly, the supporting plane 802 of the picker 102 can be vertically repositioned by adding a spacer 940 underneath the picker 102 or by using a different picker 102 having a higher supporting plane 802, to raise the supporting plane 802 to a height P₂ = B₂ = D₂, as shown in FIG. 9B. With the supporting planes 801-803 being coplanar, the tape cartridge 906 can be linearly translated from the carriage 313 to the tape drive 901 without being vertically repositioned.

Instead of using the adapter 350 as described above, it may be possible to redesign the carriage 313 and/or the tape cartridge transport magazine 104 to accommodate the new supporting plane height B₂. However, users may have already acquired a supply of tape cartridge transport magazines 104 and may be unwilling to discard that investment and replace the magazines 104 with new magazines. By utilizing an adapter 350 as described above, a small form factor tape library system 100 can be adapted for use with a variety of tape drives having different form factors (e.g., tape drives 101, 901) without redesigning the tape cartridge transport magazine 104 used in the system 100. This reconfiguration of the magazines 104 can enable the end user to more efficiently utilize existing supplies of magazines 104 with new tape formats. In addition, the use of the adapter 350 can enable the tape library manufacturer to use a common magazine design with a variety of tape formats, thereby decreasing design, development, and manufacturing costs.

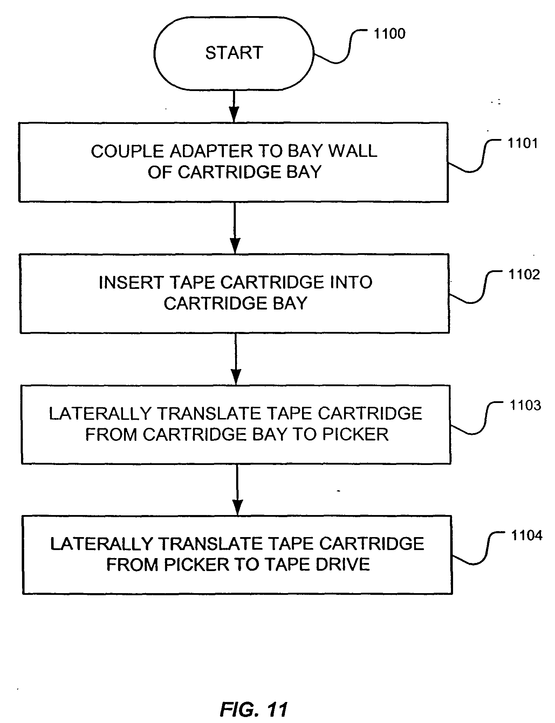

FIG. 11 is a flow chart illustrating the use of an adapter in accordance with embodiments of the present invention. The operation begins at step 1100 with a tape library system 100 having a tape cartridge magazine including one or more tape cartridge bays, each bay having a first bay wall and an opposing second bay wall. In step 1101, an adapter is coupled to the first bay wall of the cartridge. It may be desired to couple an adapter in each one of the cartridge bays in the tape magazine. In step 1102, a tape cartridge is inserted into the take cartridge bay such that a wall of the tape cartridge engages the adapter. In step 1103, the tape cartridge is laterally translated from the cartridge bay into a coplanar picker supporting plane. In step 1104, the tape cartridge is laterally translated from the picker supporting plane to the a coplanar tape drive supporting plane.

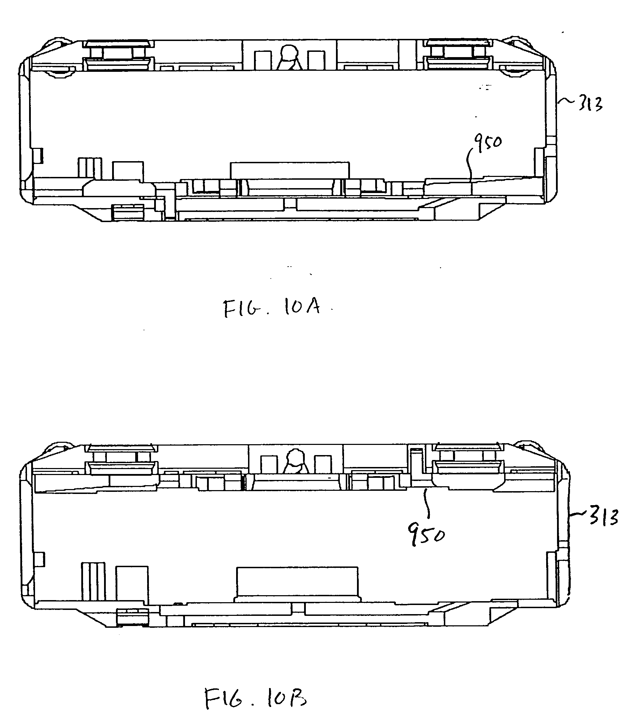

An exemplary adapter 350 is shown in greater detail in FIGS. 3B, 3C, 10A, and 10B. The adapter 350 has a generally flat upper surface 351, although the upper surface 351 may include various contours and features, such as channels 352a-352b. The contours and features may be provided to accommodate various protrusions or features on the tape cartridge 906 and/or the carriage 313, while still providing sufficient support for the tape cartridge to retain the tape cartridge at the level of supporting plane 801 . The front of the adapter 350 can be provided with a pair of cantilever beams 354 having flanges 353 provided on the free end of the beams 354. These flanges 353 are configured to mate with notches 355 in the carriage 313 to securely retain the adapter 350 in the carriage 313. An additional set of flanges 358 may be provided in the back of the adapter 350 for mating with another set of notches 359 in the rear portion of the bottom bay wall 330 of the carriage 313 to provide a more secure fit. In one embodiment, the flanges 358 in the back of the adapter 350 are first fitted into the corresponding notches 359 in the back of the carriage 313, and the front flanges 353 are then snapped into the front notches 355. To release the adapter 350, the cantilever beams 354 can be squeezed together to release the flanges 353 from the front notches 355. Thus, the adapter 950 can be quickly and easily installed and removed by the user.

A recess 356 can also be provided to expose the flag 304 on the carriage 313 to allow the system 100 to sense the presence of a tape cartridge 906 in the carriage 313. The adapter 350 may also be provided with an adapter flag 357 to enable the library system 100 to determine whether the adapter 350 has been installed in the carriage 313. The detection of the adapter flag 357 can be used for a variety of purposes. For example, when the system 100 runs through its calibration process, the system 100 may first identify the type of tape drive 901 installed in the system 100 and detect whether adapters 350 are installed in the carriages. If the type of tape drive 901 is known to require the use of adapters 350, but the adapter flags 357 of the adapters 350 are not detected, the system 100 can issue a warning to the user and/or issue an interrupt to halt further processes. Similarly, if the tape drive is known to not require the use of the adapters 350, the detection of adapter flags 357 in the carriages may result in another system interrupt. In addition, the system 100 can also check to confirm that adapters 350 are present in all of the carriages in the magazine and that no adapters 350 have been omitted. The detection of the adapter flag 357 and feedback to the user can help prevent misconfiguration of the system 100.

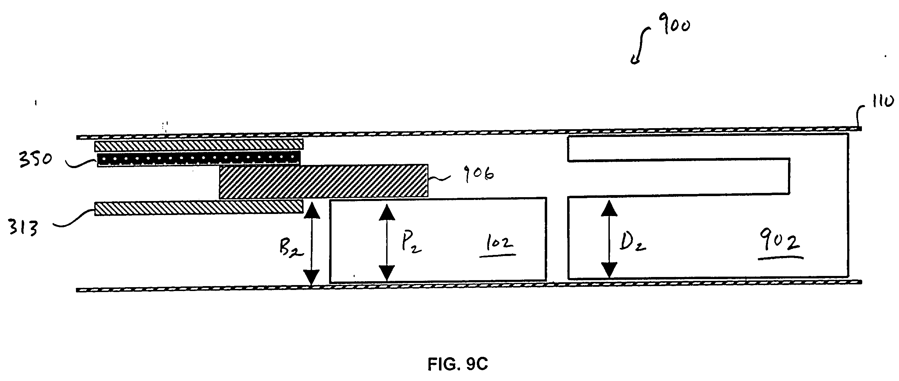

FIG. 10A shows an adapter 350 being positioned on the bottom bay wall 330 of the carriage 313. In some situations, it may be desirable to position the adapter 350 on the top bay wall 331 of the carriage 313. For example, FIG. 9C shows a library system 100 used with tape cartridges 906 having a smaller height than the tape cartridges 106, but where the tape drive 902 has a supporting plane 803 that is already coplanar with supporting planes 801-802 without the use of the adapter 350 (i.e., B₂ = P₂ = D₂). Here, it may be desirable to position the adapter 350 on the top bay wall 331 of the carriage 313 to ensure that the tape cartridge 906 fits snugly into the carriage 313 without excess clearance. FIG. 10B shows a front view of this top positioned arrangement. To retain the adapter 350 in this top position, notches may be provided on the top bay wall 331 to engage the flanges 353 and 358 of the adapter 350 in the same way as described above with respect to mounting the adapter 350 on the bottom bay wall 330.

The adapter 350 can be formed of any variety of materials, such as, for example, metal, polymer, or glass-filled polycarbonate. It may be desirable to form the adapter 350 out of the same material as the carriage 313, in order to provide consistency in strength, stiffness, and other physical properties between the carriage 313 and the adapter 350.

While the invention has been described in terms of particular embodiments and illustrative figures, those of ordinary skill in the art will recognize that the invention is not limited to the embodiments or figures described. For example, while the adapter 950 described above has a shape and size similar to that of the tape cartridge 906, in other embodiments, the adapter can be formed in different sizes. For example, the adapter can be significantly smaller than the tape cartridge 906 and may protrude only partially into the carriage 313. Therefore, only the front portion of the carriage 313 defines the raised supporting plane 801. In other embodiments, the adapter does not extend the entire width of the carriage 313. In various embodiments of the present invention, the size and shape of the adapter may vary.

In addition, the methods and steps described above indicate certain events occurring in a certain order. Those of ordinary skill in the art will recognize that the ordering of certain steps may be modified, and that such modifications are in accordance with the various embodiments of the invention. Additionally, certain of the steps may be performed concurrently in a parallel process when possible, as well as performed sequentially as described above.

Therefore, it should be understood that the invention can be practiced with modification and alteration within the spirit and scope of the appended claims. The description is thus to be regarded as illustrative instead of limiting on the invention.

## Claims

1. An adapter for use in a tape cartridge magazine comprising one or more tape cartridge bays, each tape cartridge bay including a first bay wall for engaging a first side of a tape cartridge and a second bay wall separated from the first bay wall by a first clearance distance, said adapter comprising:
a first side configured to engage the first bay wall of the cartridge bay; and
a second side opposite the first side and being configured to engage the first side of the tape cartridge such that when said adapter is positioned on the first bay wall of the cartridge bay, said second side of the adapter is separated from the second bay wall of the cartridge bay by a second clearance distance.

2. The adapter of claim 1, wherein said first bay wall of the cartridge bay is the bottom wall of the cartridge bay.

3. The adapter of claim 1, wherein said first side is further configured to engage the second bay wall of the cartridge bay.

4. The adapter of claim 1, wherein said first bay wall of the cartridge bay includes at least one slot, said adapter further comprising:
at least one flange for releasably engaging the at least one slot in the cartridge bay.

5. The adapter of claim 1, wherein said tape cartridge magazine is configured to be received in a tape library system having an adapter detector, said adapter further comprising:
a detection feature positioned to be detected by the adapter detector when the first side of the adapter is engaging the first bay wall of the cartridge bay.

6. The adapter of claim 5, wherein said detection feature comprises a protruding flag.

7. A tape cartridge system, comprising:
a tape cartridge magazine comprising one or more cartridge bays, each cartridge bay having a first bay wall; and
an adapter having a first side engaging the first bay wall of at least one of the cartridge bays and a second side opposite the first side, such that when a tape cartridge is inserted in the tape cartridge magazine, the second side of the adapter engages the tape cartridge.

8. The tape cartridge system of claim 7, wherein:
each cartridge bay has a second bay wall opposite the first bay wall; and
said adapter is configured to be attached to the second bay wall of each of the cartridge bays.

9. The tape cartridge system of claim 7, wherein:
said adapter includes a detection feature positioned to be detected by an adapter detector when the adapter is engaging the first bay wall of the cartridge bay.

10. The tape cartridge system of claim 7, further comprising:
a tape library chassis containing the tape cartridge magazine.

11. The tape cartridge system of claim 10, further comprising:
a tape cartridge picker provided in the tape library chassis, said tape cartridge picker defining a picker supporting plane coplanar with a adapter supporting plane defined by the second side of the adapter.

12. The tape cartridge system of claim 11, wherein:
said tape cartridge picker includes a translation arm having a projection for mating with a notch in the tape cartridge.

13. The tape cartridge system of claim 12, wherein:
said tape cartridge picker is configured to linearly pull the tape cartridge from the cartridge bay onto the picker supporting plane.

14. The tape cartridge system of claim 11, further comprising:
a tape drive provided in the tape library chassis, said tape drive defining a drive supporting plane coplanar with the picker supporting plane and the bay supporting plane.

15. The tape cartridge system of claim 14, wherein:
said tape cartridge picker is configured to linearly translate the tape cartridge from the picker supporting plane to the drive supporting plane.

16. A method of operating a tape library system comprising a tape cartridge magazine having one or more cartridge bays, each cartridge bay including a first bay wall and a second bay wall opposite the first bay wall such that when a first tape cartridge of a first size is positioned in the cartridge bay, said first bay wall engages a first wall of the first tape cartridge, said method comprising:
coupling an adapter to the first bay wall of a cartridge bay; and
inserting a second tape cartridge of a second size smaller than said first size into the cartridge bay such that a first wall of the second tape cartridge engages the adapter.

17. The method of claim 16, wherein said adapter includes a detection feature, said method further comprising:
detecting the presence of the detection feature of the adapter coupled to the first bay wall of the cartridge bay.

18. The method of claim 17, further comprising:
comparing the detected presence of the detection feature with an expected cartridge size; and
if the expected cartridge size does not correspond with the detected presence of the detection feature, issuing an interrupt indicating the unexpected presence of the adapter.

19. The method of claim 16, further comprising:
coupling a second adapter to the second bay wall of a second cartridge bay; and
inserting a third tape cartridge of a third size smaller than said first size into the second cartridge bay such that a first wall of the third tape cartridge engages the first bay wall of the second cartridge bay and a second wall of the third tape cartridge engages the second adapter.

20. The method of claim 19, wherein the second size of the second tape cartridge and the third size of the third tape cartridge are the same.

21. The method of claim 16, further comprising:
laterally translating the second tape cartridge from the cartridge bay into a tape cartridge picker, said adapter defining a bay supporting plane coplanar with a picker supporting plane defined by the tape cartridge picker.

22. The method of claim 21, further comprising:
laterally translating the second tape cartridge from the tape cartridge picker into a tape drive, said tape drive defining a drive supporting plane coplanar with the picker supporting plane.
